Europäisches Patentamt

(19) European Patent Office

Office européen des brevets

(11) Numéro de publication: **0 220 992**
**B1**

(12) **FASCICULE DE BREVET EUROPEEN**

(45) Date de publication du fascicule du brevet:
09.05.90

(21) Numéro de dépôt: 86402386.6

(22) Date de dépôt: 24.10.86

(51) Int. Cl.⁵: **F16L 49/00,** B01L 3/00,
**B25B 27/10, F16B 7/02**

(54) Dispositif pour désassembler les joints côniques en verrerie.

(30) Priorité: 25.10.85 FR 8515897

(43) Date de publication de la demande:
06.05.87 Bulletin 87/19

(45) Mention de la délivrance du brevet:
09.05.90 Bulletin 90/19

(84) Etats contractants désignés:
DE GB IT

(56) Documents cités:
EP-A- 0 069 180
EP-A- 0 147 924
DE-C- 467 954
GB-A- 1 341 702

(73) Titulaire: **SOCIETE DE SOUFFLAGE ARTISANAL DU VERRE, 6, rue de l'Egalité, F-94340 Joinville le Pont(FR)**

(72) Inventeur: **Oppenheimer, Michel, 5 allée des Mouilleboeufs, F-92290 Chatenay-Malabry(FR)**

(74) Mandataire: **Clanet, Denis et al, Cabinet Beau de Loménie 55, rue d'Amsterdam, F-75008 Paris(FR)**

## Description

La présente invention concerne un dispositif pour désassembler les joints côniques en verrerie, assemblés par une bague d'assemblage vissée.

Plus précisément, l'invention vise un dispositif similaire à celui qui est décrit et revendiqué dans la demande de brevet FR-A 2 565 298 au nom du présent demandeur.

Dans ce document, on prévoit de ménager sur la pièce portant l'embout cônique mâle une saillie circulaire extérieure à faible distance au-dessus du sommet de la bague d'assemblage.

Comme exposé, on doit engager une pièce en forme de disque échancré entre la bague d'assemblage et la saillie circulaire pour imposer le désassemblage lors du dévissage de la bague.

Bien que ce dispositif connu donne de bons résultats, on remarque que le disque d'aide au désassemblage constitue une pièce annexe que l'on peut perdre ou égarer, ce qui constitue un inconvénient lorsqu'on en a besoin.

De plus, l'utilisateur doit disposer d'une gamme de disques pour tous les diamètres de joints utilisés dans son installation.

Pour offrir une résistance convenable, ces disques sont pratiquement nécessairement réalisés en métal. En premier lieu, ceci les rend relativement coûteux, ce que exclut de fournir un disque pour chaque joint acheté.

En second lieu, le métal présente inévitablement des arêtes vives qui entraînent parfois des ruptures du verre et des blessures pour l'opérateur, sans compter le désagrément d'avoir remplacer le joint en tout ou partie.

Pour remédier à ces inconvénients, la présente invention propose un joint cônique en verrerie, composé d'un embout tubulaire à extrémité cônique mâle et d'un embout tubulaire à extrémité cônique femelle, et d'une bague d'assemblage entourant l'embout mâle et vissée sur l'embout femelle coopérant par serrage avec un épaulement postérieur de l'embout mâle, ce dernier comportant une saillie circulaire à distance de son extrémité cônique, caractérisé en ce qu'il comprend en outre une couronne annulaire amovible en matière plastique, formée d'une partie cylindrique engagée entre la bague d'assemblage et l'embout mâle et d'une partie plane appliquée contre le bague d'assemblage entre cette dernière et la saillie circulaire, la couronne annulaire ayant un diamètre intérieur inférieur au diamètre extérieur de la saillie.

Ainsi, l'invention permet tout à la fois un dispositif économique, fourni dès l'origine avec chaque joint, qui ne risque pas de briser les éléments en verre et qui est cependant démontable puiqu'il suffit de dégager la pièce annulaire amovible de l'embout mâle pour pouvoir faire coulisser la bague d'assemblage le long de l'embout mâle au delà de la saillie circulaire et accéder au joint torique d'étanchéité.

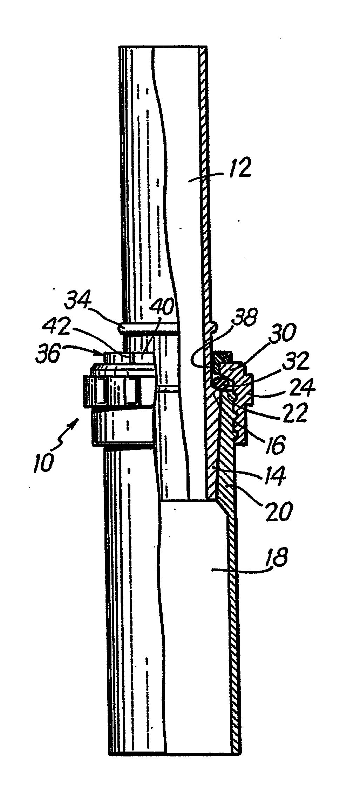

Les détails et avantages de l'invention apparaîtront clairement à la lecture de la description qui va suivre, en se référant à la figure unique ci-jointe, qui est une vue en coupe schématique avec arrachements d'un joint cônique en verrerie équipé d'un dispositif conforme à l'invention.

Le joint représenté à la figure et désigné par la référence générale 10 se compose d'un premier embout 12 en verre de forme générale tubulaire, se terminant par une extrémité cônique mâle 14 définissant par rapport au corps de l'embout un épaulement postérieur 16, et d'un second embout 18 en verre également de forme générale tubulaire et se terminant par une extrémité cônique femelle 20 se terminant par une portée frontale 22 qui, en condition assemblée représentée à la figure, est située sensiblement au même niveau que l'épaulement postérieur 16 de l'embout mâle.

Le joint comporte une bague d'assemblage 24, en matière plastique de forme cylindrique munie d'un filetage interne qui coopère avec un filetage externe défini à la surface extérieure de l'embout femelle. La bague comporte une collerette radiale 30, du côté de l'embout mâle qui constitue une collerette de serrage pour un joint torique 32 appliqué à chevauchement à la fois sur l'épaulement postérieur 16 de l'embout mâle et la portée frontale 22 de l'embout femelle, pour assurer à la fois un blocage positif des deux embouts en condition assemblée et un complément d'étanchéité si la coopération des deux extrémités côniques rodées n'y suffit pas.

Comme connu, les deux embouts sont fixés à leur autre extrémité à des éléments d'une installation complète, par exemple des appareils de laboratoire également en verre (non représentés).

Lorsque l'on désire désaccoupler les deux embouts on se trouve parfois confronté à des problèmes épineux en cas de blocage des deux embouts côniques mâle et femelle.

Pour résoudre facilement ces problèmes, l'invention a prévu le dispositif suivant :

A courte distance au-dessus (dans le sens de la figure) de la collerette 30 de la bague d'assemblage 24, l'embout mâle est pourvu d'une saillie circulaire 34, venue de matière avec le corps de l'embout.

Une couronne amovible en matière plastique 36 est assemblée sur la bague d'assemblage 24 comme suit :

La couronne est constituée d'une partie de forme générale cylindrique 38 qui est engagée dans l'espace séparant le corps tubulaire de l'embout mâle et la périphérie interne de la bague d'assemblage et d'une partie plane 40 annulaire qui est appliquée sur la face supérieure de la collerette, donc entre cette dernière et la saillie 34.

La couronne 36 est rendue amovible grâce à une fente 42, qui permet de l'"ouvrir" totalement pour la dégager de l'embout mâle, ou seulement partiellement pour lui permettre de passer au choix vers le haut par dessus la saillie 34 ou vers le bas par dessus l'épaulement postérieur et l'extrémité cônique mâle 14.

On notera au passage que la périphérie interne de la collerette 30 de la bague 24 a un diamètre légèrement supérieur à celui de la saillie circulaire 34 et à celui de la partie la plus forte de l'extrémité cônique mâle, pour des raiscns évidentes de montage/démontage de la bague d'assemblage et du joint torique.

Le désaccouplement du joint s'effectue de la manière suivante :

En un premier temps on dévisse la bague 24 pratiquement sans effort jusqu'à la venue en contact de la couronne 36 contre la saillie 34.

Puis, en un second temps, on poursuit le dévissage de la bague 24, avec un certain effort, ce qui se traduit par une force axiale dirigée vers le haut sur la saillie 34, qui permet le désaccouplement des deux embouts mâle et femelle.

La souplesse naturelle de la matière plastique constituant la couronne 36 permet de répartir la force uniformément sur toute la périphérie de la saillie 34, et d'éviter les inconvénients mentionnés du dispositif antérieur dans lequel cette force est transmise par des arêtes vives d'une pièce métallique.

Le confinement de la partie cylindrique 38 de la couronne 36 à l'intérieur de la collerette 30 empêche positivement toute "ouverture" intempestive de la couronne sous l'influence des composantes centrifuges des efforts qui se développent entre la couronne et la saillie lors de la phase finale du désaccouplement.

Une fois les deux embouts séparés, il est aisé de démonter, si nécessaire, la bague, le joint et la couronne de l'embout mâle, tout d'abord en dégageant la couronne vers le haut par rapport à la bague, puis en ouvrant la couronne fendue pour l'écarter de l'embout après quoi on fait coulisser la bague vers le haut jusqu'au dessus de la saillie, ce qui permet alors d'accéder au joint torique que l'on dégage de l'extrémité cônique grâce à sa propre élasticité; enfin, on dégage la bague d'assemblage en la faisant coulisser vers le bas.

Pour la couronne amovible on choisira des matériaux compatibles avec les sollicitations, notamment thermiques ou chimiques, qui prévalent dans l'installation ou à son voisinage. Des couronnes en polyéthyléne conviendront pour des températures modérées tandis que des couronnes en polyamide, ou en PTFE (connu sous la marque TEFLON), conviendront pour des températures plus élevées.

Enfin, dans la mesure où la partie cylindrique de la couronne est engagée en permanence dans la collerette de la bague, on peut avoir de légères difficultés dégager la couronne puisque sa partie plane est appliquée contre la bague. Pour les éviter, l'invention prévoit de conférer à cette partie cylindrique une longueur suffisante pour que lorsque la bague est abaissée vers sa position de serrage, la couronne vienne buter contre le joint torique et sa partie plane se sépare de la collerette de la bague. Il est alors facile de glisser un ongle ou un quelconque outil en forme de lame pour les dégager totalement.

Il ne faut pas apprécier le terme "cylindrique" utilisé pour qualifier cette partie (38) de la couronne dans le sens limitatif. En particulier, on pourra lui conférer une section légèrement cônique, notamment au niveau de sa face externe engagée dans la collerette de la bage de serrage pour faciliter son engagement. Ceci facilitera également le démoulage de la couronne lors de sa fabrication.

## Revendications

1. Joint (10) conique en verrerie, composé d'un embout tubulaire (12) à extrémité cônique mâle (41) et d'un embout tubulaire (18) à extrémité cônique femelle (20), et d'une bague d'assemblage (24) entourant l'embout (12) mâle et vissée sur l'embout femelle (18) coopérant par serrage avec un épaulement postérieur (16) de l'embout mâle (12), ce dernier comportant une saillie circulaire (34) à distance de son extrémité cônique, caractérisé en ce qu'il comprend en outre une couronne annulaire (36) amovible en matière plastique, formée d'une partie cylindrique (38) engagée entre la bague d'assemblage (24) et l'embout mâle (12) et d'une partie plane (40) appliquée contre la bague d'assemblage entre cette dernière et la saillie circulaire, la couronne annulaire (36) ayant un diamètre intérieur inférieur au diamètre extérieur de la saillie (34).

2. Joint selon la revendication 1, caractérisé en ce que la couronne amovible est fendue (32).

3. Joint selon l'une ou l'autre des revendications 1 et 2, caractérisé en ce que le matériau de la couronne est choisi parmi l'un des suivants: polyéthylène, polyamide, polytétrafluoroéthylène.

4. Joint selon l'une quelconque des revendications 1 à 3, caractérisé en ce que la partie cylindrique (38) de la couronne (36) a une longueur telle que, dans la position de serrage de la bague, sa partie plane (40) soit séparée de la bague (24).

5. Joint selon l'une quelconque des revendications 1 à 4, caractérisé en ce que la partie cylindrique (38) de ladite couronne (36) a une section cônique.

## Claims

1. Conical coupling (10) used in the glass industry, composed of a tubular endpiece (12) having a conical male end (14) and a tubular endpiece (18) having a female conical end (20), and an assembling ring (24) encircling the male endpiece (12) and screwed on the female endpiece (18) which cooperates under bias with a rear shoulder (16) of the male endpiece (12), said latter comprising a circular projection (34) situated at a distance from its conical end, characterized in that it further comprises a removable annular ring (36) in plastic material, said ring being formed of a cylindrical part (38) engaged between the assembling ring (24) and the male endpiece (12), and of a flat portion (40) applied against the assembling ring between said latter and the circular projection, the inner diameter of the annular ring (36) being less than the outer diameter of the projection (34).

2. Coupling according to claim 1, characterized in that the removable ring is split (32).

3. Coupling according to either one of claims 1 and 2, characterized in that the material of the removable ring is selected from the following: polyethylene, polytetrafluoroethylene.

4. Coupling according to any one of claims 1 to 3, characterized in that the length of the cylindrical part (38) of the ring (36) is such that, in the assembling ring tightening position, its flat part (40) is separated from the ring (24).

5. Coupling according to any one of claims 1 to 4, characterized in that the cylindrical part (38) of said ring (36) has a conical cross-section.

## Patentansprüche

1. Konisches Verbindungsglied (10) aus Glas, mit einer rohrförmigen Einsteckmuffe (12) mit konischem Endbereich (14) und einer rohrförmigen Muffe (18) mit konischem Endbereich (20) und mit einem Verbindungsring (24), der die Einsteckmuffe (12) umgibt und auf die Muffe (18) aufgeschraubt durch Quetschung mit einer weiter hinten gelegenen Schulter (16) der Einsteckmuffe (12) zusammenwirkt, wobei letztere einen ringförmigen Vorsprung (34) mit Abstand von seinem konischen Endbereich aufweist, dadurch gekennzeichnet, daß das Verbindungsstück ferner eine ringförmige abnehmbare Krone (36) aus Kunststoff aufweist, die aus einem zylinderförmigen Teil (38), der zwischen dem Verbindungsring (24) und der Einsteckmuffe (12) eingreift und aus einem ebenen Teil (40) geformt ist, der gegen den Verbindungsring angepreßt ist, zwischen diesem und dem ringförmigen Vorsprung, wobei die ringförmige Krone (36) einen inneren Durchmesser hat, der kleiner als der äußere Durchmesser des Vorsprungs (34) ist.

2. Verbindungsglied nach Anspruch 1, dadurch gekennzeichnet, daß die abnehmbare Krone geschlitzt ist (32).

3. Verbindungsglied nach einem der Ansprüche 1 und 2, dadurch gekennzeichnet, daß das Material, aus dem die Krone besteht, Polyethylen, Polyamid oder Polytetrafluorethylen ist.

4. Verbindungsglied nach einem der Ansprüche 1–3, dadurch gekennzeichnet, daß der zylinderförmige Teil (38) der Krone (36) eine solche Länge hat, daß in der Klemmstellung des Rings sein ebener Bereich (40) von dem Ring (24) getrennt ist.

5. Verbindungsglied nach einem der Ansprüche 1–4, dadurch gekennzeichnet, daß der zylinderförmige Teil (38) der Krone (36) einen konischen Querschnitt aufweist.